# EUROPEAN PATENT APPLICATION

(11) **EP 4 613 653 A1**
(43) Date of publication of application: **10.09.2025**
(21) Application number: 25162187.6
(22) Date of filing: 06.03.2025
(51) Int. Cl.: B64G 1/40

(54) **METHOD AND SYSTEM FOR DIRECTING LIQUIDS IN A LOW-GRAVITY TANK**

(30) Priority: 07.03.2024 US 202463562259 P; 18.02.2025 US 202519055624
(71) Applicant: Tiberi, Joseph Henry, Golden Colorado 80403 (US)
(72) Inventor: Tiberi, Joseph Henry, Golden Colorado 80403 (US)
(74) Representative: Loo, Chi Ching

(57) **Abstract**

There is disclosed a method for collecting and directing liquid contents from a tank in a low-gravity environment to an outlet of the tank. The tank may have an inner wall lining the interior and hemispherical ends opposite each other which may define a longitudinal axis. The method may include forming parallel capillary gutters on control surfaces in the tank, with a proximal end of each gutter directed toward the outlet and a distal end extending into an interior of the tank. The control surfaces may include one or more of the inner wall, an axial vane, and a lateral plate through the longitudinal axis. The method may include terminating the proximal ends within a capillary distance of the outlet, and may include narrowing a width of the gutters in a direction of flow for establishing a capillary drive of condensed liquids toward the outlet.

## Description

### Cross Reference to Related Applications

This patent application claims priority to U.S. Provisional Application No. 63/562,259 filed on March 7, 2024 and entitled OPEN CAPILLARY CHANNELS FOR PASSIVE LOW-GRAVITY LIQUID MANAGEMENT, the entire contents of Application 63/562,259 being expressly incorporated by reference herein.

### Background

Propellants or other liquids in an interior of a tank may require unique liquid management components to ensure a reliable expulsion of the liquids when operating in zero or low-gravity conditions, such as in a spacecraft. The components used in the art may include pumps, heaters, screens, gas traps, wire sponges made of wire-like elements, or perforated blades to attract and store condensation. Unfortunately, the sponges and blades may add complexity and weight, retain significant residual liquid, and may substantially reduce a storable liquid volume. Also, multiple of the blades or other condensation structures may be spaced too far apart to attract liquids in between adjacent structures, resulting in a premature 'tank empty' condition with residual propellants. Also, pumps and heaters require active electrical powering, a limited resource on the spacecraft.

In some designs, coaxial tubes and other capillary channels may passively transport liquids that condense nearby to an outlet proximate an outlet of the tank. However, the capillary channels are sometimes enclosed, which may create a 'pipeline' of liquids within the channel. And, the channels are generally of fixed width, which may require that the entire channel be filled before reliably feeding the outlet.

In still other designs, elaborate structures may be included for coping with temporary accelerations impinging on the tank, such as during spacecraft maneuvers. Liquid slosh may migrate to an inner wall of the tank where control surfaces are otherwise lacking, and where the elaborate structures sustain the aggregation and transport of liquids. Unfortunately, the additional hardware adds still more weight and complexity to the tank.

### Summary

This Summary is provided to introduce a selection of concepts in a simplified form that are further described below in the Detailed Description. This Summary is not intended to identify key aspects or essential aspects of the claimed subject matter. Moreover, this Summary is not intended for use as an aid in determining the scope of the claimed subject matter.

In an embodiment, there is disclosed a method for collecting and directing liquid contents from an interior of a tank to an outlet of the tank. The tank may be located in a spacecraft or a low gravity environment, and may have an inner wall lining the interior. Hemispherical ends opposite each other may define a longitudinal axis through the outlet centered at one end. The method may comprise forming generally parallel capillary gutters on one or more control surfaces within the tank and attractive to the liquids. The gutters may include a proximal end directed toward the outlet and a distal end extending into the interior of the tank. The control surfaces may be formed as one or more of the following planar or curvilinear structures: the inner wall, an axial vane, and a lateral plate through the longitudinal axis.

The method may further comprise terminating the gutter proximal ends within a capillary distance of the outlet or a liquid transport channel conductive to the outlet. A width of the open gutters may be narrowed in a direction of flow for establishing a capillary drive of condensed liquids toward the outlet. Providing narrowing guttered surfaces as described may minimize the need for liquid management devices.

In another embodiment, there is disclosed a system for collecting and directing liquid contents from an interior of a tank. The tank may be located in a spacecraft or a low-gravity environment, and may have an inner wall lining the interior. Hemispherical ends opposite each other may define a longitudinal axis through the outlet centered at one ends. The system may comprise one or more control surfaces within the tank and attractive to the liquids. Multiple parallel gutters may be impressed upon at least one of the one or more control surfaces.

Each of the parallel gutters may comprise a gutter depth, a proximal width at a proximal end directed toward the outlet, and a distal width at a distal end extending away from the outlet. A width of the open gutters may be narrowed in a direction of flow for establishing a capillary drive of condensed liquids toward the outlet. The depth and the distal and the proximal widths of the gutters may be sized for effective capillary action based on a liquid cohesion, adhesion, and surface tension properties of the relevant liquid. The control surfaces may be formed on at least one of the following planar or curvilinear structures: the inner wall, an axial vane extending from the longitudinal axis toward the inner wall, and a lateral plate perpendicular to the longitudinal axis.

In a further embodiment, there is disclosed a system for collecting and directing liquid contents from an interior of a rounded tank in a low-gravity environment to an outlet at one end of the tank. The tank may include an inner wall surface attractive to the liquids. The system may comprise multiple parallel gutters impressed upon a substantial portion of the inner wall of the tank. Each gutter may be defined by a gutter depth, a proximal end directed toward the outlet, and a distal end opposite the proximal end. A substantial portion of the gutters may narrow from a distal end width at the distal end to a proximal end width at the proximal end.

The narrowing may provide capillary drive of the liquids toward the outlet. The depth, the distal width, and the proximal width of the gutters may be sized for providing a control surface and capillary drive dependent on a liquid cohesion, adhesion, and surface tension properties of the relevant liquid.

Additional objects, advantages and novel features of the technology will be set forth in part in the description which follows, and in part will become more apparent to those skilled in the art upon examination of the following, or may be learned from practice of the technology.

### Brief Description of the Drawings

Non-limiting and non-exhaustive embodiments of the present invention, including the preferred embodiment, are described with reference to the following figures, wherein like reference numerals refer to like parts throughout the various views unless otherwise specified. Illustrative embodiments of the invention are illustrated in the drawings, in which:
FIGURE 1 illustrates a basic low-gravity storage tank in the prior art.
FIGURE 2 illustrates liquid management components of the storage tanks in the prior art.
FIGURE 3 illustrates additional liquid management components of the storage tanks in the prior art.
FIGURE 4a illustrates a cutaway perspective of a storage tank for a system for directing liquids, in accordance with an embodiment of the present disclosure.
FIGURE 4b illustrates a top view of a storage tank with capillary gutters in a system for directing liquids, in accordance with an embodiment of the present disclosure.
FIGURE 4c illustrates an edge view of one of the gutters in a system for directing liquids, in accordance with an embodiment of the present disclosure.
FIGURE 5 illustrates a side view of one of the gutters in a system for directing liquids, in accordance with an embodiment of the present disclosure.
FIGURE 6 illustrates a top view of multiple direct axial vanes in a system for directing liquids, in accordance with an embodiment of the present disclosure.
FIGURE 7 illustrates a side view of one of the direct axial vanes conductive directly to a liquid outlet in a system for directing liquids, in accordance with an embodiment of the present disclosure.
FIGURE 8 illustrates a side view of an axial fan vane conductive to a transport column in a system for directing liquids, in accordance with an embodiment of the present disclosure.
FIGURE 9 illustrates an edge view of the axial fan vane in a system for directing liquids, in accordance with an embodiment of the present disclosure.
FIGURE 10 illustrates a perspective view of a control surface with alternating gutters in a system for directing liquids, in accordance with an embodiment of the present disclosure.

### Detailed Description

Embodiments are described more fully below in sufficient detail to enable those skilled in the art to practice the system and method. However, embodiments may be implemented in many different forms and should not be construed as being limited to the embodiments set forth herein. The following detailed description is, therefore, not to be taken in a limiting sense.

When elements are referred to as being "connected" or "coupled," the elements can be directly connected or coupled together or one or more intervening elements may also be present. In contrast, when elements are referred to as being "directly connected" or "directly coupled," there are no intervening elements present.

As may be appreciated, based on the disclosure, there exists a need in the art for a passive and simple system for collecting and directing liquids toward an outlet of a tank under zero-gravity conditions. Further, there exists a need in the art to provide capillary drive toward the outlet, and to obviate the need for a filled capillary channel. Additionally, there exists a need in the art to inexpensively expand the control surface area for a more complete emptying of the tank, and to compensate for moments of spacecraft acceleration.

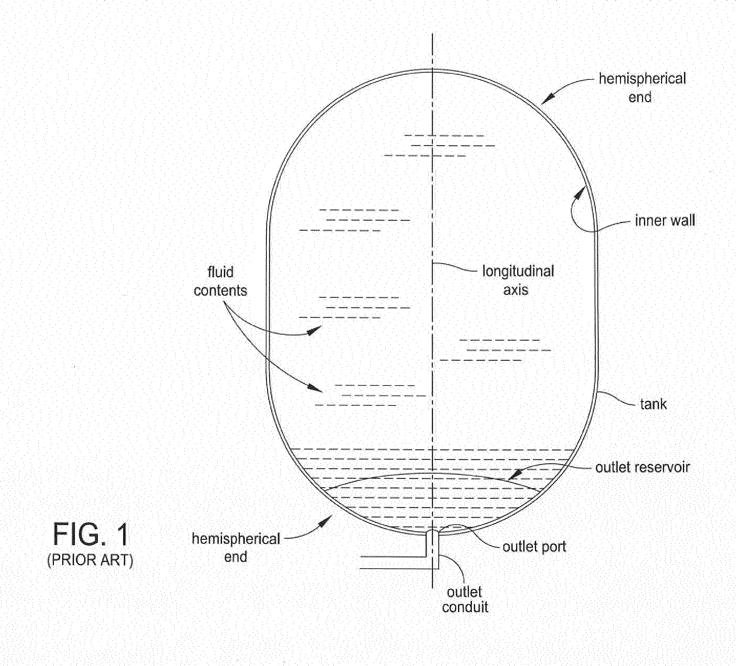

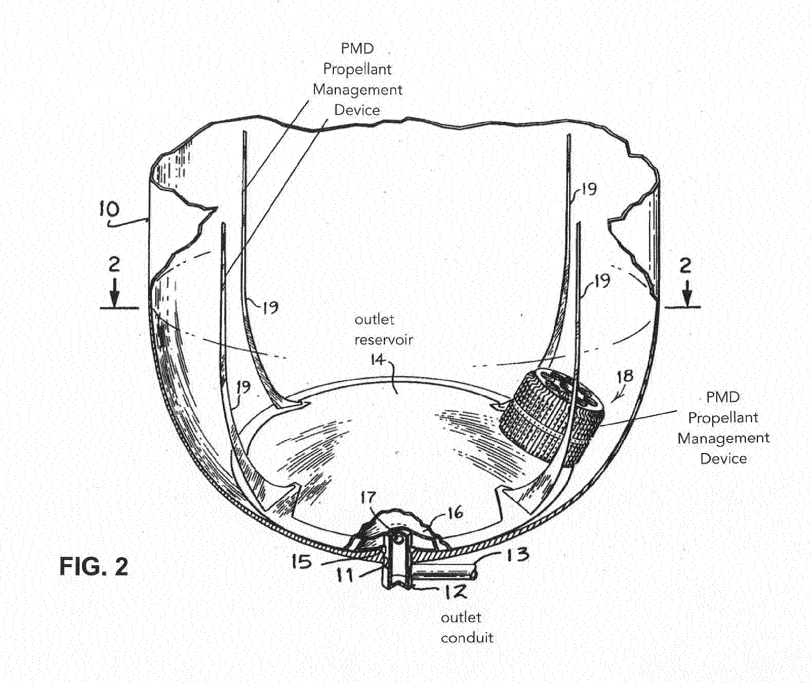

Referring to prior art FIGURES 1-3, a storage tank (10) in a spacecraft may have hemispherical ends and may contain various propellant management devices (PMDs) for collecting and directing liquids to a outlet conduit (12) of the tank through an opening/port (11). PMD components, such as the sponge structure (18) of US 4,733,531 (FIG. 2), may be disposed in an interior of the tank and may comprise a number of perforated metal panels spaced by a capillary distance for permitting the flow of liquids into the outlet while excluding pressurant gas. The outlet in FIGS. 1-2 may be a trap (14) shaped as a lenticular cavity for aggregating liquids ready for expulsion. Unfortunately, the sponge structure may add significant weight and complexity to the tank.

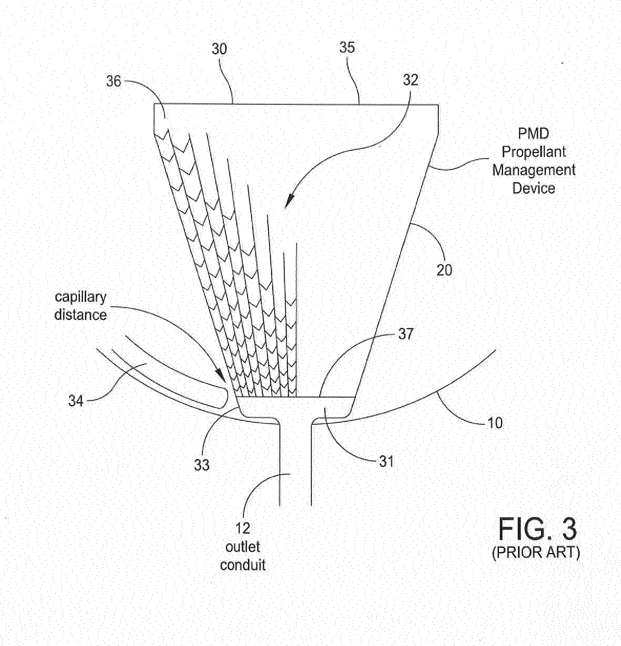

Continuing, in another prior art PMD, flat metal vanes (19) may be welded to the outlet (14) and arc upwards along an inner wall of the tank at a widening capillary distance (FIG. 2). The metal vanes with widening distance may condense liquids and drive them to the lenticular trap/reservoir. In the example of FIG. 2, there are 4 vanes, which may leave 90° of the inner wall poorly invited into condensation. In FIG. 3, a wire-mesh sponge (32) is another PMD which may direct liquids by capillary force to the outlet (expulsion zone 31). Wires may narrow to zone (31) and may include cross-wires at acute angles in order to stabilize the wire structure. Unfortunately, capillary peaking at the cross-wires may impede liquid flow. Also, a volume of the sponge (32) combined with the capillary peaking may cause the sponge to retain substantial quantities of liquid and thereby preclude a full emptying of the tank.

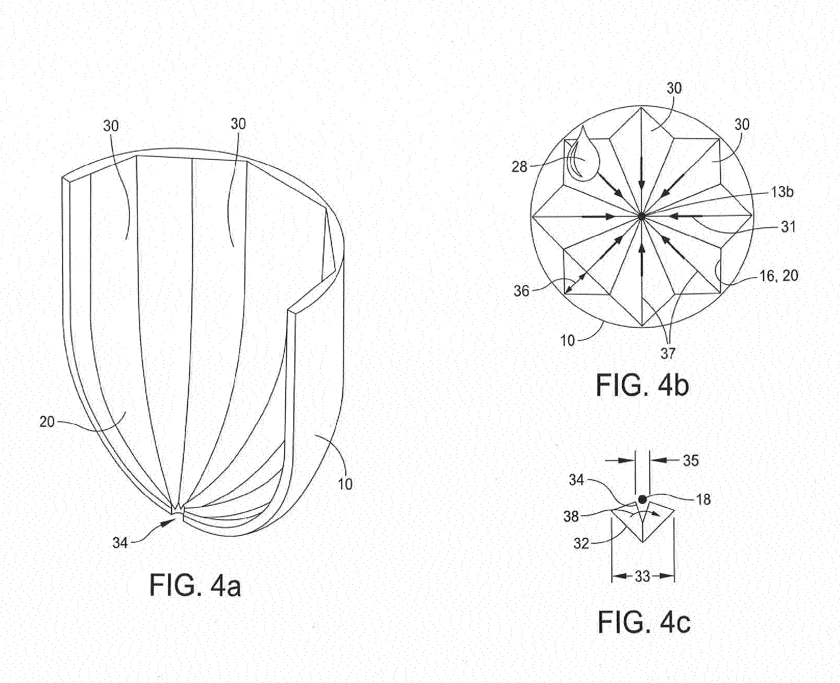

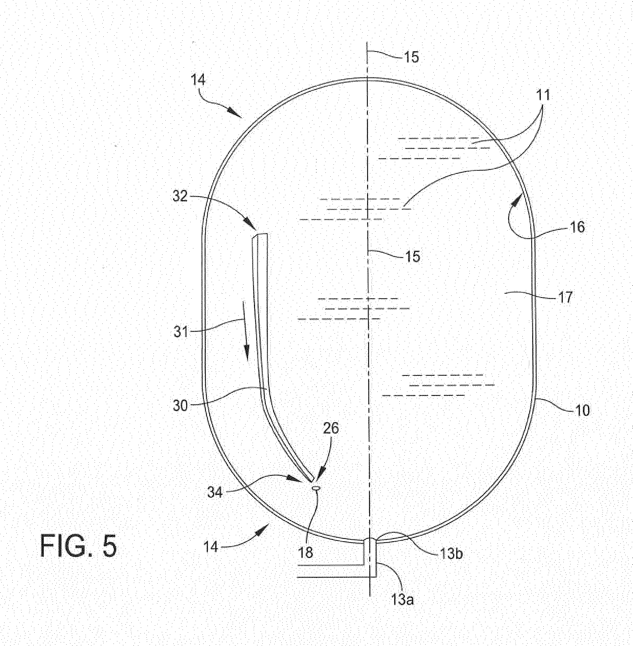

Referring now to FIGURES 4a-4c and 5, in various embodiments, there is disclosed a method for collecting and directing liquid contents 11 from an interior 17 of a tank 10 to an outlet conduit 13a through an outlet port 13b of the tank 10 in a spacecraft or low-gravity environment. The tank 10 may include an inner wall 16 lining the interior 17 and may have hemispherical ends 14 opposite each other. Ends 14 may define a longitudinal axis 15 through the outlet 13b centered at one of the ends 14. Preferably, the tank 10 may be a cylinder with rounded ends 14.

Continuing, liquids 11 may be a propellant, water, or other liquid 11 pertinent to a low-gravity application. The molecular attraction of the liquids 11 to a control surface 20 within the tank 10 (such as the inner wall 16) may be sufficiently adhesive to encourage capillary wetting of the surface 20, and may result in a droplet 28 collecting on the surface 20. Under low-gravity conditions, liquid contents 11 may wander around the interior 17 of the tank 10, and may accrete as droplets 28, liquid slosh, or blobs through cohesion (surface tension).

Referring still to FIGURES 4a-4c and 5, in various embodiments, the method may include forming generally parallel capillary gutters 30 on one or more control surfaces 20 within the tank 10 and attractive to the liquids. The gutters 30 may have a proximal end 32 directed toward the outlet 13a and a distal end 34 extending into the interior 17 of the tank 10.

Continuing, in a preferred embodiment, one of the control surfaces 20 may be formed by facing the inner wall 16 with multiple of the parallel gutters 30 where the gutter proximal ends 34 may terminate within a capillary distance 26 of the outlet 13b for facilitating liquid transfer. The distal ends 32 of the inner wall gutters 30 may reach toward the hemispherical end 14 opposite outlet 13b, and the gutters 30 may be parallel to the longitudinal axis 15 of the tank 10. In one embodiment, the inner wall gutters 30 may reach at least approximately halfway (FIG. 5) between the two hemispherical ends 14 of the tank 10 for maximizing a collecting surface area of the inner wall 16. In another embodiment, the gutters 30 may be impressed upon a substantial portion of the inner wall 16 of the tank 10.

Beneficially, maximizing a guttered surface area within the tank 10 may minimize the need for liquid management devices such as the propellent management devices (PMD) explained above in the prior art.

In one embodiment (not shown), the inner wall gutters 30 may be parallel yet non-linear, curving along the inner wall 16 to accommodate other structures within the interior 17, or curving to interface with other control surfaces 20 for handing off condensation that has been collected by one surface or another.

Referring still to FIGURES 4a-4c and 5, the gutters 30 may gradually narrow from the distal end 32 having a distal end width 33 and toward the proximal end 34 having a proximal end 35, the narrowing for establishing a capillary drive 31 of the liquids in the direction of the outlet 13b. Favorably, liquid droplets 28 attracted to one of the gutters 30 may be thereby driven toward the outlet 13b without the gutter 30 needing to be filled first. In one embodiment, a substantial portion of the gutters 30 on any of the one or more control surfaces 20 may narrow from the distal end 32 toward the proximal end 34, where some of the gutters 30 may be of fixed width to serve as liquid retention or may narrow in an opposite direction for simultaneously delivering liquids 11 to two ends of the control surface 20.

Each of the gutters may also be characterized with a gutter depth 36 shown in FIG. 4c at the distal end 32. Gutter depth 36 may be held constant over a length of each gutter, or may be increased or decreased as the width becomes narrower in whatever proportion sustains adequate capillary drive.

Narrowing of gutter width and, importantly, interior angle over the direction of liquid flow (capillary drive) may cause a proportional increase in surface attraction per unit volume of liquid and therefore maintain the capillary drive. Beneficially, the following gutter dimensions may be adjusted to set the capillary drive: the gutter depth 36, the distal width 32, the proximal width 34, and a per-length rate of narrowing. For a given gutter length, the gutter dimensions may be sized for effective capillary action based on a liquid cohesion of the liquid and the surface attraction to the control surface 20. In one embodiment, anticipating an accelerative maneuver by the spacecraft may be compensated for by adjusting the capillary drive of a particular gutter design by adjusting one or more of the gutter dimensions.

Continuing still with FIGURES 4a-4c and 5, a gutter cross section may be formed as a rounded or a rectangular channel (not shown) having the gutter dimensions described above, or the cross section may be a triangular channel having two planar sides. In a preferred embodiment, the gutters are open channels, where the distal end width gradually narrows to a proximal end width that is approximately one-half to one-third of the distal end width, and an decreased interior angle, for providing sufficient capillary drive. Said another way, the distal end width may be preferably set to be approximately two to three times the proximal end width. It should be appreciated that width narrowing may be achieved by a shrinking interior angle.

In the case of the triangular cross section, referring to FIGURE 4c, a distal end angle 38 between the two planar sides of the gutter 30 may preferably range from approximately 100° to approximately 170°. The 9-gutter embodiment of FIG. 4a and the 8-gutter embodiment of FIG. 4b may be representative of the 100-170° angle range. In other embodiments, depending on liquid cohesion, a thickness of the inner wall 16, and the desired capillary drive 31, the gutters 30 may be grooves having a smaller distal end angle 38 and a smaller distal end width 33. According to theory, capillary drive may be inversely proportional to gutter width, given a constant gutter depth 36, and therefore a narrow groove (gutter) may provide greater capillary drive, if needed.

Referring now to FIGURES 4a-4c and 5, in various embodiments, the parallel gutters 30 may be divided into a lower group 22 of adjacent narrowing channels directed toward the outlet 13b and an upper group 24 of adjacent narrowing channels in series with the lower group 22. The upper channels 24 may feed their upper proximal ends 34 into the lower distal ends 32 of the lower channels 22. The upper and the lower channels may be arranged approximately in series for providing the control surface 20 on the inner wall 16. The two groups in series traversing a length on the control surface may multiply the capillary drive over that provided by a single group of gutters traversing that length.

Proximal fingers of the proximal ends 34 of the upper group 24 may interleave somewhat with the distal fingers of the distal ends 32 of the lower group 22 for handing off and driving condensation from the interior 17 of the tank 10 to the outlet 13b.

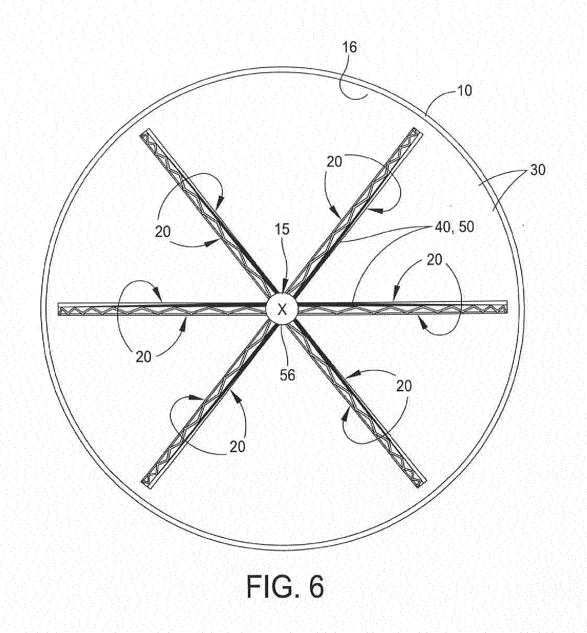

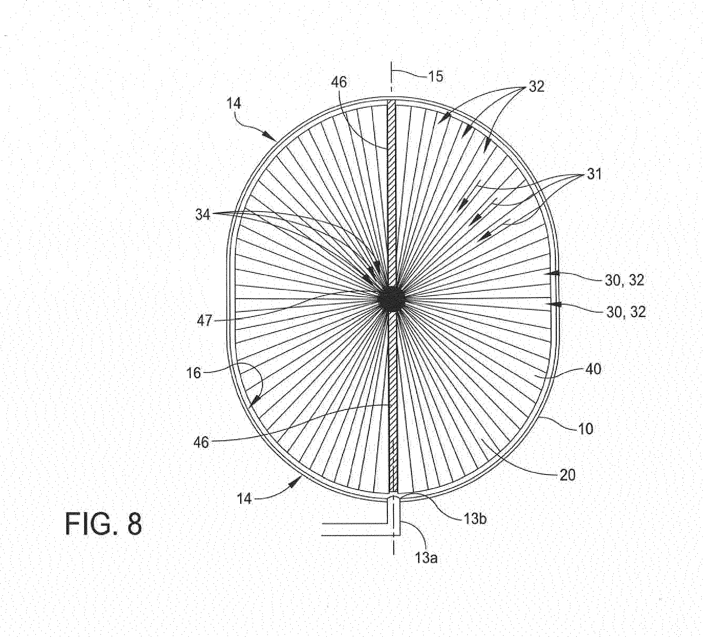

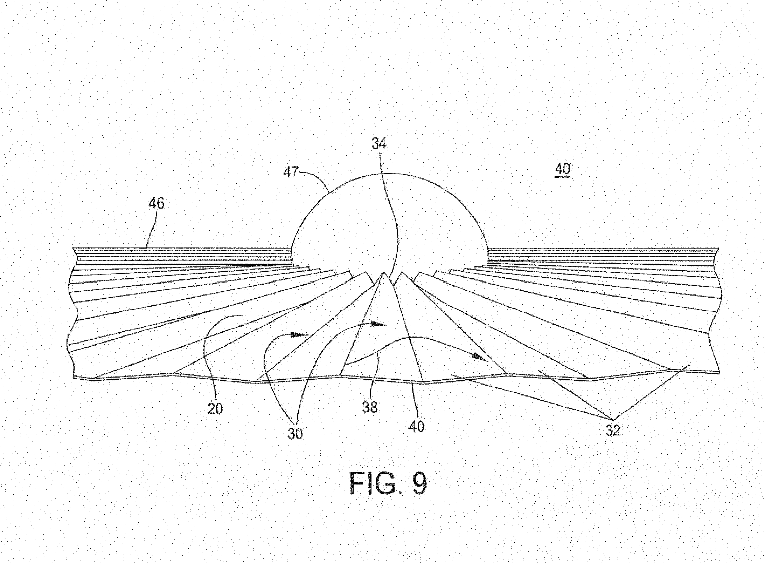

Proceeding to FIGURES 6-9, in other embodiments, the one or more guttered control surfaces 20 deployable in the method for directing liquids may be formed as multiple axial vanes, shown as a direct axial vane 50 in FIGS. 6-7, and shown as a fan axial vane 40 in FIGS. 8-9. A 'top' view (above the outlet 13b) of FIG. 6 may illustrate six of the vanes 40, 50. The method may include multiple direct axial vanes 50 extending from a central support column 56 mounted to the tank 10 along the axis 15 (FIG. 6-7). The vanes 50 may be arrayed and spaced 360° around the column 15 for evenly occupying the interior 17 of the tank 10. Each of the vanes 50 may parallel the longitudinal axis 15.

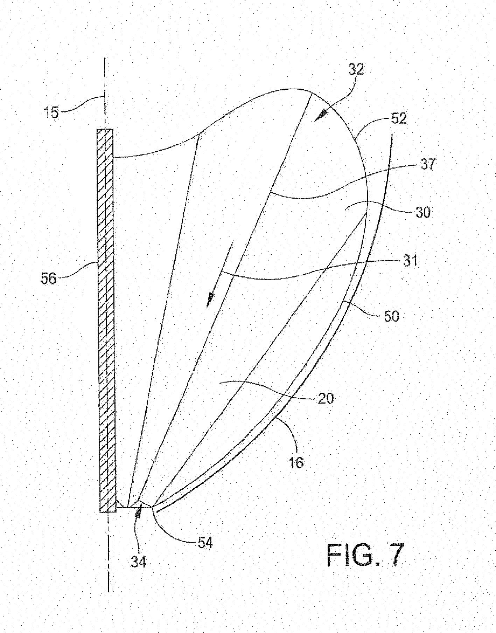

Continuing with FIGURES 6-7, the parallel gutters 30 may be formed on the direct axial vanes 50 and may be configured such that the proximal ends 34 of a majority of the gutters 30 may reach to within a capillary distance 26 (not shown) of the outlet 13b for transporting liquids 16 directly to outlet 13b. Alternatively, the proximal ends 34 may connect to outlet 13b without a capillary gap, or through a necessary intermediate structure (not shown) near the outlet 13b. Some of the proximal ends 34 may terminate on the support column 56 or may be free floating, as may be necessary to accommodate a flaring pattern of the narrowing gutters 30 (FIG. 7). A vane distal edge 52 may arc outwards and away from the outlet 13b and may coincide with gutter distal ends 32.

Further, in the embodiment of FIGURE 6, the method may include deploying both the direct 50 or the fan 40 axial vanes as well as the inner wall guttering 30 (shown here as rectangular micro-channels). The method may further include stamping a guttering pattern onto a shaped piece of sheet metal to produce the guttered vanes (FIGS. 7-9), and which may produce the guttering 30 on both sides of the vanes (40,50). In alternate embodiments not shown, the direct axial vane 50 may mount to a central mount near the outlet without a need for the support column 56. Additionally, each of the vanes 50 may extend laterally from one side of the tank, through the axis 15, and across to the other side with or without a central column structure 56.

Referring now to FIGURES 8-9, in various embodiments, the method for directing liquids may include arraying multiple of the fan axial vanes 40 around a liquid transport column 46 mounted to the tank 12 and centered on the axis 15. The fan vanes 40 may be spaced evenly through 360° of interior space 17, each vane within a plane of the longitudinal axis. The column 46 may be configured to support the vanes 40 and to transport fan vane condensation to the outlet 13b. A liquid collection hub 47 may be interposed mid-column and may be configured to collect the vane condensation from the proximal ends 34 and transport the condensation to the outlet 13b via the transport column 46. Transport through the column may be facilitated by capillary action.

Continuing, the method may further include forming the narrowing vane gutters 30 in a fanning pattern over approximately 180° with respect to the liquid collection hub 47. In alternate configurations, the vane fanning may span a portion of the 180° arc, or may subtend 90° or less. Advantageously, the 180° fan vanes 40 being arranged radially over the cylindrical interior 17 may attract nearly all of the liquid contents 11 of the tank 10, and thereby cope with accelerative maneuvers of the spacecraft in any direction without the use of other liquid management devices. Relatively few gutters 30 are shown for the direct vane 50 depicted in FIG. 7, for simplicity's sake; the gutter pattern depicted in FIGS. 8-9 might easily be adopted for the direct vanes 50.

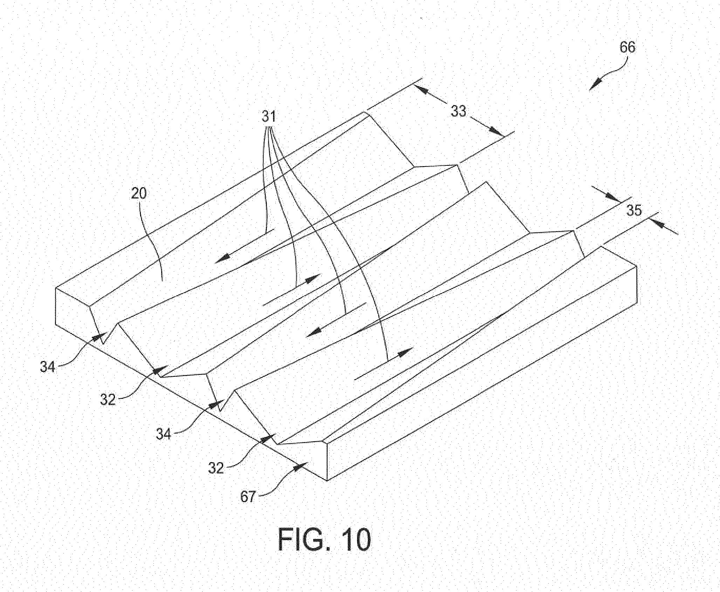

Turning now to FIGURE 10, in still another embodiment, the one or more control surfaces in the method may be formed as a lateral collecting plate 60. The method may include layering one or more of the lateral collecting plates 60 centered around and perpendicular to the central transport column 46. The transport column 46 may be mounted to the tank 12 and may be configured to collect liquids from the proximal ends 34 of the plate gutters 30 and to the outlet 13b. The plates 60 may be spaced evenly to occupy a substantial volume of the tank interior 17 for maximizing liquid collection. Plate gutters 30 may narrow from the distal ends 32 proximate the inner wall 16 toward the proximal ends .

Alternatively, in an embodiment not shown, the distal ends 32 of the one or more lateral plates may terminate part way to the inner wall 16. In one embodiment, the distal ends 32 may terminate within a capillary distance of the inner wall 16 for transferring liquids between the inner wall 16 and the collecting plate 60.

Referring now to FIGURE 10, in various embodiments, the method for directing liquids may further include alternating a direction of narrowing of the parallel gutters 30 for providing capillary drive of condensation toward a first 67 and a second 68 end of an alternating control surface 66. One or both of the first and the second surface ends may be configured to terminate within a capillary distance from one or more of the inner wall 16, the central transport column 46, the axial vane (40, 50), and an interior liquid management structure (FIGS 1-3).

The alternating surface 66 may be a flat sheet stamped with the alternating gutters, and may be mounted axially or laterally across any cavity in the interior 17 not adequately served by other collecting surfaces. Advantageously, alternating the directionality of the gutters 30 may more completely occupy a surface area of the surface 66 with 'grooves' by placing wide portions of one gutter next to narrow portions of an adjacent gutter. The alternating gutter surface 66 may provide a more effective collecting function, and may be particularly suited to completely parallel gutters.

Although the above embodiments have been described in language that is specific to certain structures, elements, compositions, and methodological steps, it is to be understood that the technology defined in the appended claims is not necessarily limited to the specific structures, elements, compositions and/or steps described. Rather, the specific aspects and steps are described as forms of implementing the claimed technology. Since many embodiments of the technology can be practiced without departing from the spirit and scope of the invention, the invention resides in the claims hereinafter appended.

### PRIORITY APPLICATION CLAIMS FORMING PART OF THE DESCRIPTION AS PREFERRED EMBODIMENTS ONLY

1. A method for collecting and directing liquid contents from an interior of a tank to an outlet of the tank storing the liquids in a spacecraft or low-gravity environment, the tank having an inner wall lining the interior and hemispherical ends opposite each other, the ends defining a longitudinal axis through the outlet centered at one of the ends, the method comprising:
   forming generally parallel capillary gutters on one or more control surfaces within the tank and attractive to the liquids, the gutters having a proximal end directed toward the outlet and a distal end extending into the interior of the tank, where the control surfaces are formed on at least one of the following planar or curvilinear structures: the inner wall, an axial vane extending from the longitudinal axis toward the inner wall, and a lateral plate through the longitudinal axis;
   terminating the gutter proximal ends within a capillary distance of the outlet or a liquid transport channel conductive to the outlet;
   narrowing a width of the open gutters in a direction of flow for establishing a capillary drive of condensed liquids toward the outlet; and
   where the guttered surfaces minimize the need for liquid management devices.
2. The method of claim 1, further comprising:
   facing the inner wall with the multiple parallel gutters each of triangular cross section and whose distal ends reach at least approximately halfway between the two hemispherical ends of the tank, the gutters being parallel to the longitudinal axis of the tank.
3. The method of claim 1, wherein:
   the gutter is a triangular channel having a distal end width gradually narrowing to a proximal end width that is approximately one-half to one-third of the distal end width.
4. The method of claim 3, wherein:
   the gutter includes a distal end angle between two sides of the gutter of between 100° and 170° at the distal end.
5. The method of claim 1, wherein:
   the gutter is a triangular channel having a distal end angle gradually shrinking to a proximal end angle that is less than the distal end angle.
6. The method of claim 1, further comprising:
   arraying multiple direct axial vanes extending from a central support column mounted to the tank along the longitudinal axis, spacing the vanes 360° around the column, forming the narrowing gutters on each vane, and converging a vane proximal end of a majority of the gutters within a capillary distance of the outlet for transporting liquids directly to the outlet.
7. The method of claim 1, further comprising:
   arraying multiple fan axial vanes 360° around a liquid transport column mounted to the tank and within a plane of the longitudinal axis, centering the column on the longitudinal axis and configuring the column to transport fan vane condensation to the outlet, fanning out the narrowing gutters formed on each vane over approximately 180° from a liquid collection hub interposed mid-column, and configuring the hub to collect liquids delivered by the proximal ends of the gutters and conduct the collected liquids to the outlet via the transport column.
8. The method of claim 1, further comprising:
   alternating a direction of narrowing for the parallel gutters for providing capillary drive toward a first and a second end of one of the control surfaces, the first and the second surface ends each being configured to terminate within a capillary distance from one or more of the inner wall, a central transport column mounted within the longitudinal axis, an axial vane, and a liquid management device.
9. The method of claim 1, further comprising:
   adjusting the capillary drive provided by any of the parallel gutters in order to accomodate an accelerative maneuver by the spacecraft, each of the gutters having a distal end width gradually narrowing to a proximal end width, where the distal end width and a rate of narrowing are adjustable to vary the capillary drive.
10. The method of claim 1, further comprising:
   layering one or more lateral collecting plates formed with the gutters and centered around a liquid transport column mounted to the tank within the longitudinal axis, the plates spanning a substantial volume of the tank interior for maximizing liquid collection, the transport column being configured to collect liquids delivered by the proximal ends of the gutters and conveying the combined liquids to the outlet.
11.A system for collecting and directing liquid contents from an interior of a tank in a low-gravity environment to an outlet of the tank storing the liquids, the tank having an inner wall lining the interior and hemispherical ends opposite each other, the ends defining a longitudinal axis through the outlet centered at one of the ends, the system comprising:
   one or more control surfaces disposed within the tank and attractive to the liquids;
   multiple parallel gutters impressed upon the one or more control surfaces, each of the parallel gutters having a gutter depth, a proximal width at a proximal end directed toward the outlet, and a distal width at a distal end extending away from the outlet, each gutter gradually narrowing toward the proximal end for establishing a capillary drive of the liquids; and
   where the depth and the distal and the proximal widths of the gutters are sized for effective capillary action based on a liquid cohesion of the liquid and the surface attraction, and where the control surfaces are formed on at least one of the following planar or curvilinear structures: the inner wall, an axial vane extending from the longitudinal axis toward the inner wall, and a lateral plate perpendicular to the longitudinal axis.
12. The system of claim 11, further comprising:
   the inner wall is faced with the gutters parallel to the longitudinal axis and the gutter proximal ends terminate within a capillary distance of the outlet, and where the gutters each have a triangular cross section with the distal ends reaching at least approximately halfway between the two hemispherical ends of the tank.
13. The system of claim 12, wherein:
   the inner wall gutters are narrowing grooves having a distal end width of approximately 0.5-5 mm at the distal ends.
14. The system of claim 11, wherein:
   the proximal ends of the gutters terminate within a capillary distance of one of the outlet and a liquid transport channel conductive to the outlet.
15. The system of claim 11, further comprising:
   multiple direct axial vanes extending from a central support column mounted to the tank and centered on the longitudinal axis, the multiple vanes spaced 360° around the column, each vane stamped with the narrowing gutters, a vane proximal end of a majority of the gutters converging within a capillary distance of the outlet for transporting liquids directly to the outlet.
16. The system of claim 11, further comprising:
   multiple fan vanes each extending laterally within a plane of the longitudinal axis and from a liquid transport column mounted to the tank, the column centered on the longitudinal axis and configured to deliver fan condensation to the outlet from a liquid-collection hub located mid-column, each of the multiple fan vanes stamped with the narrowing gutters, each vane fanning out approximately 180° from the collection hub, a majority of the gutter proximal edges meeting the collection hub to within a capillary distance.
17. A system for collecting and directing liquid contents from an interior of a rounded tank in a low-gravity environment to an outlet at one end of the tank storing the liquids, the tank having an inner wall lining the interior and attractive to the liquids, the system comprising:
   multiple parallel gutters impressed upon a substantial portion of the inner wall of the tank, each gutter having a gutter depth, a proximal end directed toward the outlet, and a distal end opposite the proximal end, a substantial portion of the gutters narrowing from a distal end width at the distal end to a proximal end width at the proximal end for providing capillary drive of the liquids toward the outlet; and
   where the depth, the distal width, and the proximal width of the gutters are sized for providing a control surface and capillary drive dependent on a liquid cohesion of the liquid and the surface attraction to the inner wall.
18. The system of claim 17, wherein:
   the proximal ends of the gutters terminate within a capillary distance of the outlet.
19. The system of claim 17, wherein:
   each of the gutters is a triangular groove and the distal end width is approximately two to three times the proximal end width.
20. The system of claim 19, wherein:
   the triangular groove includes a distal end angle between two sides of the groove of approximately 100° to 170° at the distal end.
21. The system of claim 17, wherein:
   the parallel gutters are divided into a lower group of adjacent narrowing channels directed toward the outlet and an upper group of adjacent narrowing channels in series with the lower group, the upper channels feeding their upper proximal ends into the lower distal ends of the lower channels, the upper and the lower channels in series for providing the control surface on the inner wall and multiplying the capillary drive.

## Claims

1. A system for collecting and directing liquid contents from an interior of a tank in a low-gravity environment to an outlet of the tank storing the liquids, the tank having an inner wall lining the interior and hemispherical ends opposite each other, the ends defining a longitudinal axis through the outlet centered at one of the ends, the system comprising:
one or more control surfaces disposed within the tank and attractive to the liquids; multiple parallel gutters impressed upon the one or more control surfaces, each of the parallel gutters having a gutter depth, a proximal width at a proximal end directed toward the outlet, and a distal width at a distal end extending away from the outlet, each gutter gradually narrowing toward the proximal end for establishing a capillary drive of the liquids; and
where the depth and the distal and the proximal widths of the gutters are sized for effective capillary action based on a liquid cohesion of the liquid and the surface attraction, and where the control surfaces are formed on at least one of the following planar or curvilinear structures: the inner wall, an axial vane extending from the longitudinal axis toward the inner wall, and a lateral plate perpendicular to the longitudinal axis.

2. The system of claim 1, further comprising:
the inner wall is faced with the gutters parallel to the longitudinal axis and the gutter proximal ends terminate within a capillary distance of the outlet, and where the gutters each have a triangular cross section with the distal ends reaching at least approximately halfway between the two hemispherical ends of the tank.

3. The system of claim 2, wherein:
the inner wall gutters are narrowing grooves having a distal end width of approximately 0.5-5 mm at the distal ends.

4. The system of claim 1, wherein:
the proximal ends of the gutters terminate within a capillary distance of one of the outlet and a liquid transport channel conductive to the outlet.

5. The system of claim 1, further comprising:
multiple direct axial vanes extending from a central support column mounted to the tank and centered on the longitudinal axis, the multiple vanes spaced 360° around the column, each vane stamped with the narrowing gutters, a vane proximal end of a majority of the gutters converging within a capillary distance of the outlet for transporting liquids directly to the outlet.

6. The system of claim 1, further comprising:
multiple fan vanes each extending laterally within a plane of the longitudinal axis and from a liquid transport column mounted to the tank, the column centered on the longitudinal axis and configured to deliver fan condensation to the outlet from a liquid-collection hub located mid-column, each of the multiple fan vanes stamped with the narrowing gutters, each vane fanning out approximately 180° from the collection hub, a majority of the gutter proximal edges meeting the collection hub to within a capillary distance.

7. The system of claim 1, wherein:
each of the gutters is a triangular groove and the distal end width is approximately two to three times the proximal end width.

8. The system of claim 7, wherein:
the triangular groove includes a distal end angle between two sides of the groove of approximately 100° to 170° at the distal end.

9. The system of claim 1, wherein:
the parallel gutters are divided into a lower group of adjacent narrowing channels directed toward the outlet and an upper group of adjacent narrowing channels in series with the lower group, the upper channels feeding their upper proximal ends into the lower distal ends of the lower channels, the upper and the lower channels in series for providing the control surface on the inner wall and multiplying the capillary drive.

10. The system of claim 1, wherein:
the gutter is a triangular channel having a distal end width gradually narrowing to a proximal end width that is approximately one-half to one-third of the distal end width.

11. The system of claim 1, wherein:
the gutter is a triangular channel having a distal end angle gradually shrinking to a proximal end angle that is less than the distal end angle.

12. The system of claim 1, further comprising:
an alternating configuration of a direction of narrowing for the parallel gutters for providing capillary drive toward a first and a second end of one of the control surfaces, the first and the second surface ends each being configured to terminate within a capillary distance from one or more of the inner wall, a central transport column mounted within the longitudinal axis, an axial vane, and a liquid management device.

13. The system of claim 1, further comprising:
an adjusted configuration of the capillary drive provided by any of the parallel gutters in order to accomodate an accelerative maneuver by the spacecraft, each of the gutters having a distal end width gradually narrowing to a proximal end width, where the distal end width and a rate of narrowing are adjustable to vary the capillary drive.

14. The system of claim 1, further comprising:
a layered configuration of one or more lateral collecting plates formed with the gutters and centered around a liquid transport column mounted to the tank within the longitudinal axis, the plates spanning a substantial volume of the tank interior for maximizing liquid collection, the transport column being configured to collect liquids delivered by the proximal ends of the gutters and conveying the combined liquids to the outlet.
